# EUROPÄISCHE PATENTSCHRIFT

(11) **EP 1 792 827 B1**
(45) Veröffentlichungstag und Bekanntmachung des Hinweises auf die Patenterteilung: **23.03.2011**
(21) Anmeldenummer: 06017258.2
(22) Anmeldetag: 18.08.2006
(51) Int. Cl.: B64D 11/06

(54) **Sitzbefestigungsvorrichtung**
Seat attachment device
Dispositif de fixation d'un siège

(30) Priorität: 01.12.2005 DE 102005057208
(43) Veröffentlichungstag der Anmeldung: 06.06.2007
(60) Teilanmeldung: 10011569.0
(73) Patentinhaber: Recaro Aircraft Seating GmbH & Co. KG, 74523 Schwäbisch Hall (DE)
(72) Erfinder: Mejuhas, Marsel, 80686 München (DE); Doll, Jürgen, 88079 Kressbronn (DE)
(74) Vertreter: Daub, Thomas

(56) Entgegenhaltungen:
- DE-A1- 3 447 178
- DE-A1- 19 812 490
- DE-U1-202004 015 211
- US-A- 3 344 749
- US-A- 3 523 669
- US-A- 3 605 637
- US-A- 4 771 969

## Beschreibung

### Stand der Technik

Die Erfindung geht aus von einer Sitzbefestigungsvorrichtung nach dem Oberbegriff des Anspruchs 1.

Aus der Druckschrift US 4,771,969 ist eine Sitzbefestigungsvorrichtung zur Befestigung eines Sitzes an einem Boden eines Flugzeugs bekannt. Die Sitzbefestigungsvorrichtung weist Horizontalbefestigungsmittel auf, die zu einer formschlüssigen Fixierung der Sitzbefestigungsvorrichturig in einer Längsrichtung einer Befestigungsschiene dienen, die am Boden des Flugzeugs befestigt ist und Durchtrittsöffnungen aufweist. Ferner umfasst die Sitzbefestigungsvorrichtung Vertikalbefestigungsmittel, die zu einer Fixierung senkrecht zum Boden dienen. Bei der Montage werden zuerst die Vertikalbefestigungsmittel in die Durchtrittsöffnungen der Befestigungsschiene eingeführt. Anschließend wird die Sitzbefestigungsvorrichtung in Längsrichtung der Befestigungsschiene verschoben, so dass die Vertikalbefestigungsmittel unter Seitenflanken der Befestigungsschiene zum Liegen kommen und die Horizontalbefestigungsmittel in Längsrichtung der Befestigungsschiene formschlüssig in die Ausnehmungen der Befestigungsschiene eingeführt werden können. Mit einer Verriegelungsschraube der Betätigungseinheit der Sitzbefestigungsvorrichtung werden die Vertikalbefestigungsmittel kraftschlüssig unter die Seitenflanken der Befestigungsschiene gespannt.

Der Erfindung liegt insbesondere die Aufgabe zugrunde, eine Sitzbefestigungsvorrichtung bereitzustellen, die sich kraftschlüssig an einer Befestigungsschiene befestigen lässt und die eine erhöhte Montagesicherheit und einen erhöhten Montagekomfort aufweist. Sie wird gemäß der Erfindung durch die Merkmale des Anspruchs 1 gelöst. Weitere Ausgestaltungen ergeben sich aus den Unteransprüchen.

### Vorteile der Erfindung

Die Erfindung geht aus von einer Sitzbefestigungsvorrichtung zur Befestigung eines Sitzes oder zum Festzurren von Lasten an einer an einem Boden befestigten Befestigungsschiene, die Durchtrittsöffnungen aufweist, mit wenigstens einem Horizontalbefestigungsmittel, wenigstens einem Vertikalbefestigungsmittel sowie mit wenigstens einer Betätigungseinheit, die als Verriegelungseinheit zur kraftschlüssigen Verriegelung dient, bei welcher das vertikale Befestigungsmittel von unten an Profilflanken der Befestigungsschiene gedrückt wird.

Unter einem "Horizontalbefestigungsmittel" soll insbesondere ein Befestigungsmittel verstanden werden, das zur Befestigung in wenigstens eine zumindest im Wesentlichen parallel zu einer aufgespannten Bodenauflageebene der Sitzbefestigungsvorrichtung bzw. - in einer Einbaulage betrachtet - zu einer Hauptbodenebene des Bodens, auf dem ein Sitz aufgeständert werden soll, ausgerichteten Richtung dient, während unter einem "Vertikalbefestigungsmittel" insbesondere ein Befestigungsmittel verstanden werden soll, das zur Befestigung in wenigstens eine zumindest im Wesentlichen senkrecht zur Bodenauflageebene der Sitzbefestigungsvorrichtung ausgerichteten Richtung dient. Unter einer "Betätigungseinheit" soll insbesondere eine Einheit verstanden werden, die von einem Bediener bei der Montage, Demontage, Wartung und/oder Einstellung der Sitzbefestigungsvorrichtung zu betätigen ist.

Es wird vorgeschlagen, dass die Sitzbefestigungsvorrichtung einen Rastmechanismus aufweist, der zur Positionierung zumindest des Horizontalbefestigungsmittels vorgesehen ist und ein selbsttätiges Bewegen des Horizontalbefestigungsmittels in eine vorbestimmte Stellung bewirkt, wobei die Betätigungseinheit dazu vorgesehen ist, eine kraftschlüssige Verriegelung nur zu ermöglichen, wenn das Horizontalbefestigungsmittel in eine Durchtrittsöffnung eingerastet ist.

Durch eine entsprechende Ausgestaltung können eine erhöhte Montagesicherheit und ein erhöhter Montagekomfort erreicht werden.

Zudem wird vorgeschlagen, dass die Betätigungseinheit zur formschlüssigen Verriegelung vorgesehen ist. Mit einem Formschluss können hohe Kräfte vorteilhaft sicher aufgenommen werden.

Ferner wird vorgeschlagen, dass die Sitzbefestigungsvorrichtung wenigstens eine Positionierhilfeeinheit mit einer Ausgabeeinheit aufweist. Dabei soll unter einer "Ausgabeeinheit" insbesondere eine Einheit zur Ausgabe eines optischen, taktilen und/oder akustischen Signals verstanden werden, anhand dessen ein Bediener auf eine vorliegende Positionierung, insbesondere auf eine vorliegende ordnungsgemäße Positionierung, schließen kann. Durch eine entsprechende Ausgestaltung können wiederum insbesondere die Montagesicherheit und der Montagekomfort erhöht werden.

Bildet die Betätigungseinheit in zumindest einer Stellung zumindest teilweise eine Sicherungseinheit zur Sicherung einer anderen Betätigungseinheit, kann ein unerwünschtes Verstellen der zu sichernden Betätigungseinheit vorteilhaft vermieden werden und die Demontage- und insbesondere Montagesicherheit können weiter erhöht werden.

Ferner wird vorgeschlagen, dass die Betätigungseinheit zumindest teilweise einstückig mit einer Signalausgabeeinheit ausgeführt ist, wodurch zusätzliche Bauteile, Gewicht, Bauraum und Montageaufwand eingespart und dennoch vorteilhaft entsprechende Signale an einen Bediener ausgegeben werden können, wie akustische, taktile und/oder insbesondere optische Signale.

Umfasst die zumindest teilweise eine Sicherungseinheit bildende Betätigungseinheit zumindest einen schwenkbar gelagerten Bügel, kann diese besonders konstruktiv einfach verwirklicht werden, insbesondere kann diese vorteilhaft einfach einstückig mit einer Signalausgabeeinheit, vorzugsweise mit einer optischen Signalausgabeeinheit, ausgeführt werden.

Wenn die Betätigungseinheit eine Verriegelungsschraube aufweist, kann eine besonders einfache Bedienung der Betätigungseinheit erreicht werden. Insbesondere kann durch eine entsprechende Ausgestaltung eine verliersichere Lösung bereitgestellt werden, wodurch der Montagekomfort gesteigert werden kann.

Des Weiteren wird vorgeschlagen, dass die Sitzbefestigungs, vorrichtung einen Grundkörper und ein relativ zum Grundkörper bewegbar gelagertes Schiebeteil mit dem Horizontalbefestigungsmittel umfasst, wobei in einer Endstellung des Schiebeteils die Verriegelungsschraube durch das Schiebeteil in Richtung zur Unterseite des Grundkörpers gesperrt ist und damit ein eine Verriegelung bewirkendes Einschrauben der Verriegelungsschraube in den Grundkörper verhindert ist. Dadurch kann vorteilhaft eine fehlerhafte Montage der Sitzbefestigungsvorrichtung vermieden werden.

Weist die Verriegelungsschraube ein erstes Bolzenteil mit einem Außengewinde auf, das in ein zweites Bolzenteil ohne Gewinde übergeht, kann eine Gewährleistung des Einschraubens der Verriegelungsschraube bei einer ordnungsgemäßen Positionierung der Sitzbefestigungsvorrichtung konstruktiv auf eine besonders einfache Weise verhindert und eine Verliersicherheit der Verriegelungsschraube besonders einfach gestaltet werden.

Außerdem wird vorgeschlagen, dass in der Endstellung des Schiebeteils eine Kopplung des Gewindes des ersten Bolzenteils mit einem Innengewinde in einem Gewindebereich des Grundkörpers verhindert ist, wobei, wenn das Horizontalbefestigungsmittel in eine Durchtrittsöffnung eingerastet ist, die Verriegelungsschraube mit dem Gewinde des ersten Bolzenteils in das Innengewinde im Gewindebereich eingeschraubt werden kann. Dadurch kann auf konstruktiv einfache weise vorteilhaft eine fehlerhafte Montage der Sitzbefestigungsvorrichtung vermieden werden.

Eine erfindungsgemäße Sitzbefestigungsvorrichtung eignet sich besonders vorteilhaft zur Befestigung eines Flugzeugsitzes in einem Flugzeug, ist jedoch auch in anderen, dem Fachmann als sinnvoll erscheinenden Bereichen einsetzbar, wie beispielsweise im Bereich von Fahrzeugen, wie größeren Personenwagen, Reisebussen, Schiffsfähren, oder im Rahmen einer Saalbestuhlung, wie für eine Kongresshalle, einen Theatersaal, einen Kinosaal usw. Ferner lässt sich die Sitzbefestigungsvorrichtung auch zum Festzurren von Lasten, Gepäck oder sonstigem Transportgut von Flug- und Fahrzeugen jedweder Art verwenden.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine Sitzbefestigungsvorrichtung schräg von oben im montierten Zustand an einer Befestigungsschiene,
- Fig. 2: Einzelteile der Sitzbefestigungsvorrichtung aus Figur 1,
- Fig. 3: die Sitzbefestigungsvorrichtung aus Figur 1 in verriegeltem Zustand mit geschnitten dargestellter Befestigungsschiene,
- Fig. 4: die Sitzbefestigungsvorrichtung aus Figur 1 in entriegeltem Zustand mit geschnitten dargestellter Befestigungsschiene,
- Fig. 5: einen Längsschnitt durch die Sitzbefestigungsvorrichtung vor einem Verriegelungsvorgang,
- Fig. 6: die Sitzbefestigungsvorrichtung entsprechend Figur 5 bei einem Montagevorgang,
- Fig. 7: die Sitzbefestigungsvorrichtung entsprechend Figur 5 nach einem Verriegelungsvorgang im verriegelten Zustand,
- Fig. 8: einen Querschnitt durch die Sitzbefestigungsvorrichtung im verriegelten Zustand,
- Fig. 9: eine alternative Sitzbefestigungsvorrichtung schräg von oben im montierten Zustand an einer Befestigungsschiene,
- Fig. 10: einen Längsschnitt durch die Sitzbefestigungsvorrichtung aus Figur 9 in verriegeltem Zustand,
- Fig. 11: die Sitzbefestigungsvorrichtung aus Figur 9 bei einem Montagevorgang schräg von oben und
- Fig. 12: die Sitzbefestigungsvorrichtung beim Montagevorgang in einem gegenüber Figur 11 nachfolgenden Montagestadium.

### Beschreibung der Ausführungsbeispiele

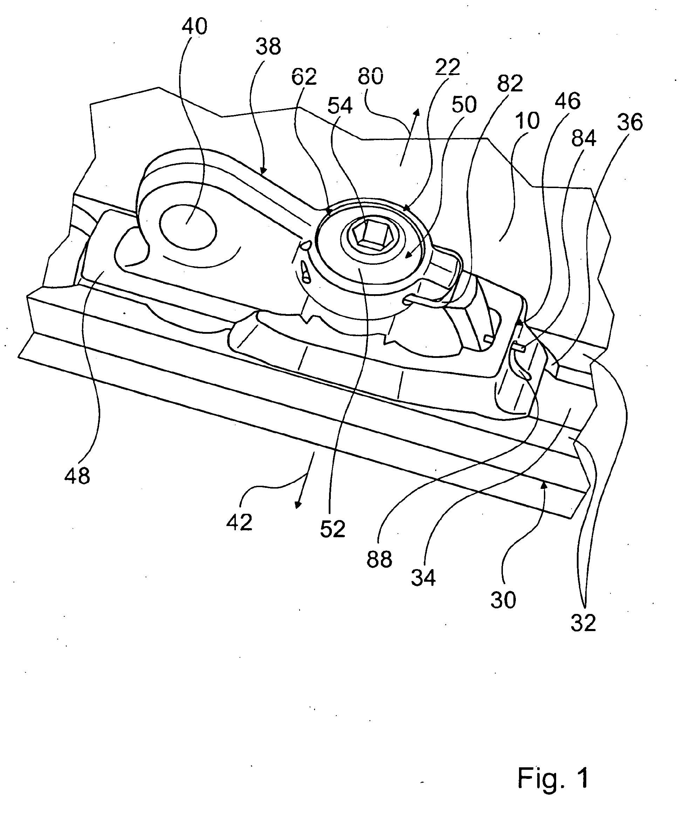

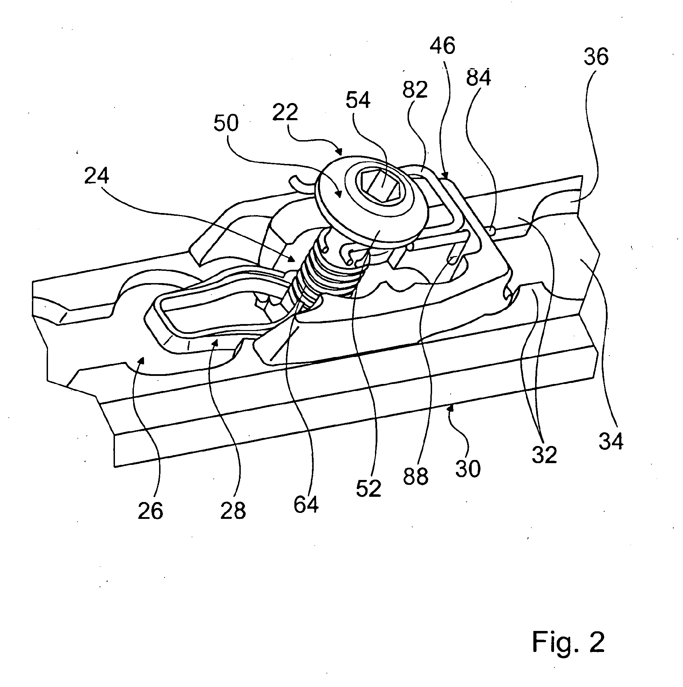

Figur 1 zeigt eine Sitzbefestigungsvorrichtung zur Befestigung eines Flugzeugsitzes an einem Boden 10 bzw. einem Kabinenboden eines Flugzeugs, und zwar an in Längsrichtung des Flugzeugs verlaufenden, an dem Kabinenboden befestigten und parallel zu demselben ausgerichteten Befestigungsschienen 30. Die Befestigungsschienen 30 schließen mit ihrer Oberseite bündig mit dem Boden 10 bzw. dem Kabinenboden des Flugzeugs ab. Die Befestigungsschiene 30 wird von einem Hohlprofil gebildet, das an seiner Oberseite mit einander zugewandten Profilflanken 32 einen Längskanal 34 begrenzt. Der Längskanal 34 weist in einem vorgegebenen Maß seinen freien Eintrittsquerschnitt verbreiternde Durchtrittsöffnungen 36 auf, die voneinander einen gleichmäßigen Abstand aufweisen und bohrungsartig ausgeführt sind (Figuren 1 bis 4).

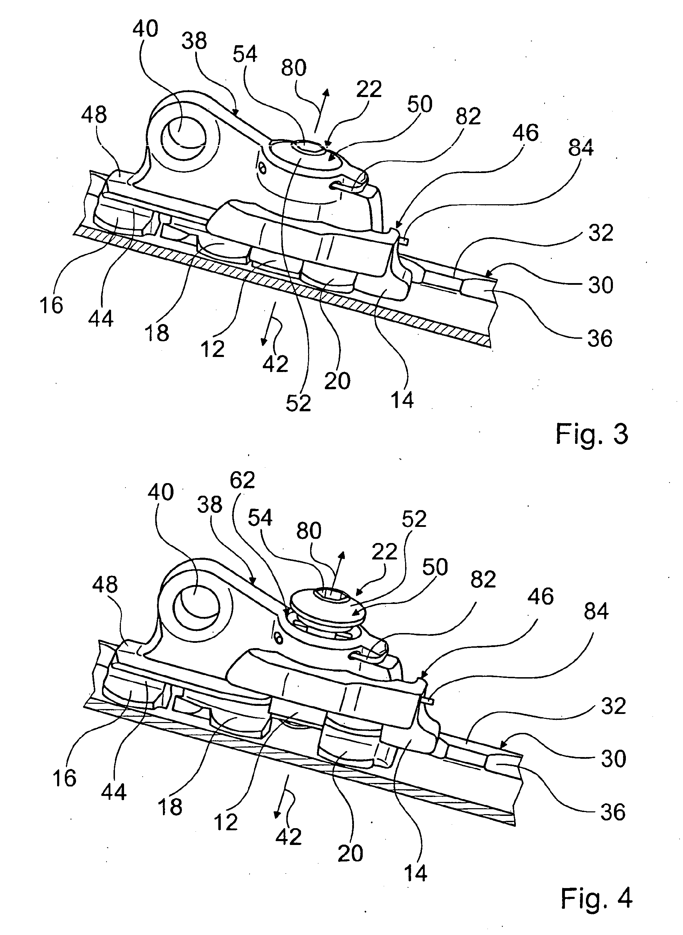

Die Sitzbefestigungsvorrichtung weist einen Grundkörper 38 mit einem angeformten Lagerauge 40 zum Befestigen eines Sitzfußes auf, und zwar zur Befestigung eines hinteren Sitzfußes. Der Grundkörper 38 weist eine einstückig angeformte Deckplatte 48 auf, an deren dem Lagerauge 40 abgewandter Seite ein senkrecht auf der Deckplatte 48 stehender Steg 44 mit drei Vertikalbefestigungsmitteln 16, 18, 20 einstückig angeformt ist (Figuren 3 und 4). Die Vertikalbefestigungsmittel 16, 18, 20 weisen quer zur Längserstreckung des Grundkörpers 38 beidseitig abstehende kreissegmentförmige Ausformungen auf.

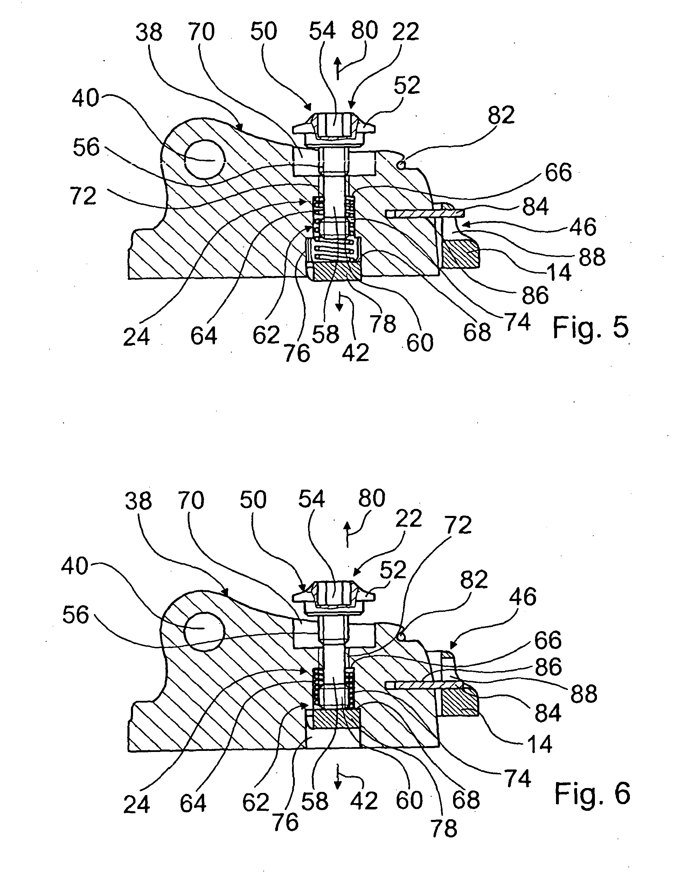

Zudem weist die Sitzbefestigungsvorrichtung ein im Wesentlichen senkrecht zur Deckplatte 48 des Grundkörpers 38 relativ zu demselben bewegbar gelagertes und in Längsrichtung des Grundkörpers 38 parallel zur Deckplatte 48 relativ zum Grundkörper 38 fixiertes Schiebeteil 46 auf. Am Schiebeteil 46 sind zwei Horizontalbefestigungsmittel 12, 14 einstückig angeformt, die im Wesentlichen in ihrer Form den Durchtrittsöffnungen 36 entsprechen. Das Schiebeteil 46 und der Grundkörper 38 sind in Längsrichtung des Grundkörpers 38 an einem dem Lagerauge 40 abgewandten Ende des Grundkörpers 38 über einen Stift 84 verliersicher verbunden (Figuren 5 bis 8), der in einer Bohrung 86 des Grundkörpers 38 fixiert ist und in ein Langloch 88 des Schiebeteils 46 hineinragt.

Ferner weist die Sitzbefestigungsvorrichtung eine als Verriegelungs- und Entriegelungseinheit dienende Betätigungseinheit 22 mit einer Verriegelungsschraube 50 auf. Die Verriegelungsschraube 50 weist einen Schraubenkopf 52 mit einem Innensechskant 54 auf. An den Schraubenkopf 52 schließt sich ein erstes Bolzenteil 56 der Verriegelungsschraube 50 mit einem Außengewinde an, das in ein zweites Bolzenteil 58 ohne Gewinde übergeht. Das zweite Bolzenteil 58 weist einen Außendurchmesser auf, der einem Kerndurchmesser des ersten Bolzenteils 56 entspricht. Das zweite Bolzenteil 58 geht in ein drittes Bolzenteil 60 mit einem Außengewinde über, das bis auf die Länge dem Gewinde des ersten Bolzenteils 56 entspricht.

Die Verriegelungsschraube 50 ragt im Wesentlichen senkrecht zur Längsrichtung, von einer Deckseite des Grundkörpers 38 in Richtung 42 einer Unterseite des Grundkörpers 38 in eine Ausnehmung 62 desselben hinein (Figuren 5 bis 8). In der Ausnehmung 62 ist zudem eine vorgespannte Schraubendruckfeder 64 eines Rastmechanismus 24 der Betätigungseinheit 22 angeordnet, die mit ihrem der Deckseite des Grundkörpers 38 zugewandten Ende an einer Auflagefläche 66 des Grundkörpers 38 und mit ihrem der Deckseite des Grundkörpers 38 abgewandten Ende an einer Auflagefläche 68 des Schiebeteils 46 abgestützt ist. Die Ausnehmung 62 weist im Bereich der Deckseite des Grundkörpers 38 einen Schraubenkopfaufnahmebereich 70 auf, der von seinem Durchmesser und seiner Tiefe im Wesentlichen an den Schraubenkopf 52 angepasst ist, so dass dieser in dem Schraubenkopfaufnahmebereich 70 nahezu vollständig versenkt werden kann. Zwischen dem Schraubenkopfaufnahmebereich 70 und der Auflagefläche 66 weist die Ausnehmung 62 einen Gewindebereich 72 mit einem Innengewinde auf. An den Gewindebereich 72 schließt sich in Richtung der Unterseite des Grundkörpers 38 ein Federaufnahmebereich 74 der Ausnehmung 62 mit einem im Vergleich zum Gewindebereich 72 größeren Durchmesser an. Im Bereich der Unterseite des Grundkörpers 38 weist die Ausnehmung 62 zudem einen Aufnahmebereich 76 zur Aufnahme eines Stegs 78 des Schiebeteils 46 auf.

Vor der Montage der Sitzbefestigungsvorrichtung ist die Verriegelungsschraube 50 mit ihrem am ersten Bolzenteil 56 vorgesehenen Außengewinde aus dem Innengewinde im Gewindebereich 72 in die von der Unterseite des Grundkörpers 38 abgewandte Richtung herausgeschraubt (Figur 5). Das am dritten Bolzenteil 60 vorgesehene Gewindeteil dient als Verliersicherung der Verriegelungsschraube 50 und befindet sich vor der Montage im Federaufnahmebereich 74.

Bei der Montage der Sitzbefestigungsvorrichtung werden die Vertikalbefestigungsmittel 16, 18, 20 durch die Durchtrittsöffnungen 36 geführt. Dabei kommen die Horizontalbefestigungsmittel 12, 14 mit der Oberseite der Befestigungsschiene 30 in Anlage und das Schiebeteil 46 wird gemeinsam mit den Horizontalbefestigungsmitteln 12, 14 in eine von der Unterseite des Grundkörpers 38 abgewandte Richtung 80 verschoben (Figuren 4 und 6). Bei der Bewegung des Schiebeteils 46 kommt dasselbe mit der Verriegelungsschraube 50 in Kontakt und verschiebt diese weiter aus der Ausnehmung 62 heraus, so dass das Gewinde des ersten Bolzenteils 56 und das Innengewinde im Gewindebereich 72 beabstandet angeordnet sind (Figuren 5 und 6).

Eine Verriegelungsfunktion der Betätigungseinheit 22 ist an die Position des Schiebeteils 46 und damit an die Positionen der Horizontalbefestigungsmittel 12, 14 gekoppelt, und zwar kann eine Verriegelung mittels der Verriegelungsschraube 50 erst durchgeführt werden, wenn das Schiebeteil 46 und damit die Horizontalbefestigungsmittel 12, 14 in ihrer der Deckseite des Grundkörpers 38 abgewandten Endstellung angeordnet sind, wie dies in den Figuren 3, 7 und 8 dargestellt ist. Befindet sich das Schiebeteil 46 in seiner der Deckseite des Grundkörpers 38 zugewandten Endstellung, wird die Verriegelungsschraube 50 durch das Schiebeteil 46 in Richtung zur Unterseite des Grundkörpers 38 gesperrt, so dass eine Kopplung des Gewindes des ersten Bolzenteils 56 der Verriegelungsschraube 50 mit dem Innengewinde im Gewindebereich 72 der Ausnehmung 62 bzw. des Grundkörpers 38 und damit ein eine verriegelung bewirkendes Einschrauben der Verriegelungsschraube 50 in den Grundkörper 38 verhindert ist.

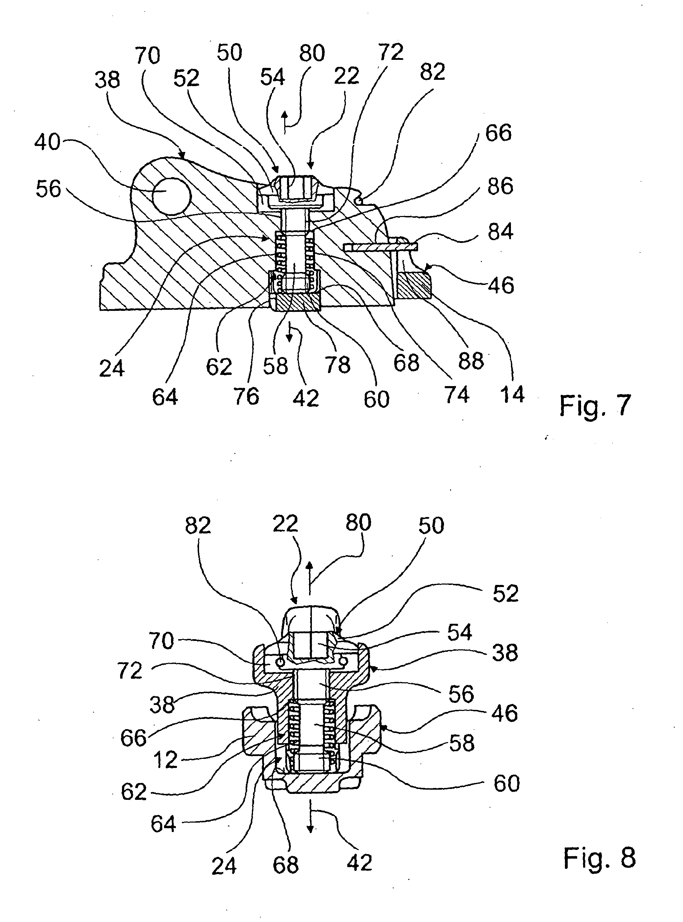

Um eine Verriegelung zu ermöglichen, muss die Sitzbefestigungsvorrichtung entlang der Befestigungsschiene 30 verschoben werden, bis die Horizontalbefestigungsmittel 12, 14 jeweils im Bereich der Durchtrittsöffnungen 36 zum Liegen kommen und, angetrieben durch die Schraubendruckfeder 64 des Rastmechanismus 24, in die Durchtrittsöffnungen 36 einrasten (Figur 7). Die Lage des Schiebeteils 46 und damit der Horizontalbefestigungsmittel 12, 14 wird damit mechanisch erfasst. Um für einen Bediener eine ordnungsgemäße Positionierung der Sitzbefestigungsvorrichtung in Längsrichtung der Befestigungsschiene 30 noch weiter zu vereinfachen, ist zudem eine Positionierhilfeeinheit 26 mit einer von einer Blechfeder gebildeten Ausgabeeinheit 28 vorgesehen. Ist die ordnungsgemäße Position in Längsrichtung der Befestigungsschiene 30 erreicht, rastet die Blechfeder mit einem angeformten bauchigen Bereich in eine Durchtrittsöffnung 36 ein und signalisiert einem Bediener taktil und insbesondere akustisch, dass die ordnungsgemäße Position erreicht ist. Die Blechfeder könnte auch mit einem Sichtfenster und einer Markierung zusammenwirken, so dass einem Bediener ein optisches Signal ausgegeben werden kann, an dem der Bediener erkennt, ob die Sitzbefestigungsvorrichtung in einer ordnungsgemäßen Position ist.

Sind die Horizontalbefestigungsmittel 12, 14 in die Durchtrittsöffnungen 36 eingerastet, kann die Verriegelungsschraube 50 mit dem Gewinde des ersten Bolzenteils 56 in das Innengewinde im Gewindebereich 72 eingeschraubt werden, wodurch die Horizontalbefestigungsmittel 12, 14 formschlüssig in ihrer Verriegelungsstellung gesichert werden (Figuren 3, 7 und 8), so dass die Betätigungseinheit 22 zur formschlüssigen Verriegelung vorgesehen ist. Ferner ist die Betätigungseinheit 22 zur kraftschlüssigen Verriegelung vorgesehen, und zwar wird bei der Montage mittels der Verriegelungsachraube 50 das Schiebeteil 46 im Bereich der Ausnehmung 62 nach unten belastet und damit die Schraubendruckfeder 64 in ihrer Spannkraft unterstützt. Durch die Belastung werden die Horizontalbefestigungsmittel 12, 14 gegen ein Bodenteil der Befestigungsschiene 30 und die Vertikalbefestigungsmittel 16, 18, 20, die durch das Verschieben der Sitzbefestigungsvorrichtung in Längsrichtung der Befestigungsschiene 30 zwischen den Durchtrittsöffnungen 36 zum Liegen gekommen sind, von unten an die Profilflanken 32 der Befestigungsschiene 30 gedrückt. Mittels der kraftschlüssigen Verriegelung werden vorteilhaft eine Spielfreiheit und ein Vibrationsschutz erreicht. Alternativ könnte die Betätigungseinheit 22 jedoch auch nur zur formschlüssigen Verriegelung vorgesehen sein.

Um zu vermeiden, dass sich die Verriegelungsschraube 50 aus ihrer Verriegelungsstellung selbsttätig löst, ist zudem eine Sicherungseinheit mit einer Bügelfeder 82 vorgesehen, die in der Verriegelungsstellung der Verriegelungsschraube 50 in an dieselbe angeformte Abflachungen einrastet und als Verdrehsicherung dient.

Zur Demontage wird die Verriegelungsschraube 50 mit dem Gewinde des ersten Bolzenteils 56 wieder aus dem Innengewinde im Gewindebereich 72 herausgeschraubt. Anschließend wird das Schiebeteil 46 vom Bediener manuell von der Oberseite der Befestigungsschiene 30 abgehoben, um anschließend die Sitzbefestigungsvorrichtung in Längsrichtung der Befestigungsschiene 30 verschieben und aus dieser entnehmen zu können.

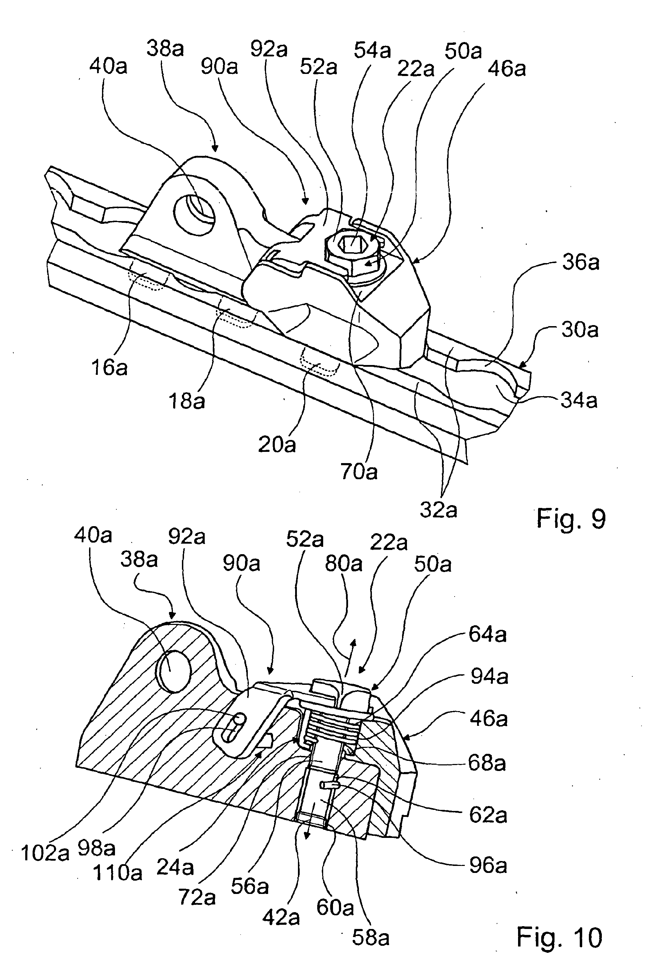

In den Figuren 9 bis 12 ist eine alternative Sitzbefestigungsvorrichtung dargestellt. Im Wesentlichen gleich bleibende Bauteile, Merkmale und Funktionen sind grundsätzlich mit den gleichen Bezugszeichen beziffert. Zur Unterscheidung der Ausführungsbeispiele ist jedoch den Bezugszeichen des Ausführungsbeispiels in den Figuren 9 bis 12 der Buchstabe a hinzugefügt. Die nachfolgende Beschreibung beschränkt sich im Wesentlichen auf die Unterschiede zu dem Ausführungsbeispiel in den Figuren 1 bis 8, wobei bezüglich gleich bleibender Bauteile, Merkmale und Funktionen auf die Beschreibung zum Ausführungsbeispiel in den Figuren 1 bis 8 verwiesen werden kann.

Die Sitzbefestigungsvorrichtung weist eine als Verriegelungs- und Entriegelungseinheit dienende Betätigungseinheit 22a mit einer Verriegelungsschraube 50a auf.

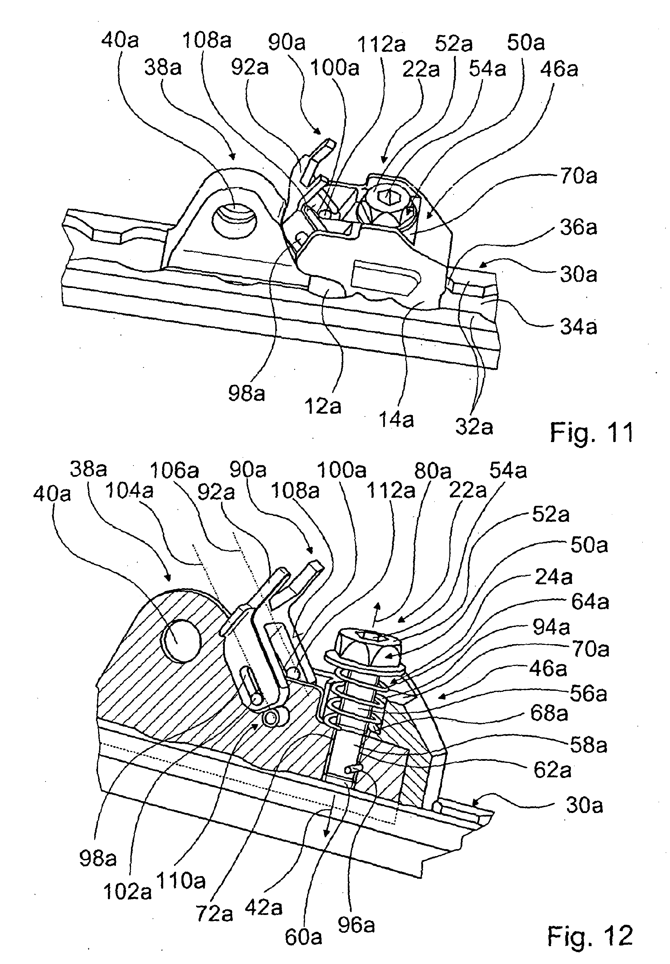

Die Verriegelungsschraube 50a ragt im Wesentlichen senkrecht zur Längsrichtung, von einer Deckseite eines Schiebeteils 46a und eines Grundkörpers 38a in Richtung 42a einer Unterseite des Grundkörpers 38a in Ausnehmungen 62a, 94a des Schiebeteils 46a und des Grundkörpers 38a hinein (Figuren 10 und 12).

In der Ausnehmung 94a des Schiebeteils 46a ist zudem eine vorgespannte Schraubendruckfeder 64a eines Rastmechanismus 24a der Betätigungseinheit 22a angeordnet, die mit ihrem - in einer Einbaulage betrachtet - oberen Ende an einem Schraubenkopf 52a der Verriegelungsschraube 50a und mit ihrem unteren Ende an einer von einem radial nach innen weisenden, ringscheibenförmigen Fortsatz des Schiebeteils 46a gebildeten Auflagefläche 68a abgestützt ist. Die Ausnehmung 94a des Schiebeteils 46a oberhalb der Auflagefläche 68a ist von ihrem Durchmesser und ihrer Tiefe im Wesentlichen an den Schraubenkopf 52a angepasst, so dass dieser darin nahezu vollständig versenkt werden kann. Die Ausnehmung 62a des Grundkörpers 38a weist ausgehend von ihrem - in der Einbaulage betrachtet - oberen, dem Schiebeteil 46a zugewandten Ende im ersten Drittel ihrer Länge einen Gewindebereich 72a mit einem Innengewinde auf. An den Gewindebereich 72a schließt sich in Richtung der Unterseite des Grundkörpers 38a ein gewindefreier Bereich mit einem im Vergleich zum Gewindebereich 72a größeren Durchmesser an.

Vor der Montage der Sitzbefestigungsvorrichtung ist die Verriegelungsschraube 50a mit ihrem an einem ersten Bolzenteil 56a vorgesehenen Außengewinde aus dem Innengewinde des Gewindebereichs 72a in die von der Unterseite des Grundkörpers 38a abgewandte Richtung herausgeschraubt (Figur 12). Zur Verliersicherung ist in den Grundkörper 38a nach der Montage der Verriegelungsschraube 50a ein Querstift 96a eingeschoben, der in die Ausnehmung 62a ragt, so dass ein Gewindeteil an einem dritten Bolzenteil 60a der Verriegelungsschraube 50a auf der der Unterseite des Grundkörpers 38a zugewandten Seite gesichert ist und ein versehentliches Herausschrauben der Verriegelungsschraube 50a sicher vermieden werden kann.

Bei der Montage der Sitzbefestigungsvorrichtung werden an den Grundkörper 38a angeformte Vertikalbefestigungsmittel 16a, 18a, 20a durch Durchtrittsöffnungen 36a einer Befestigungsschiene 30a geführt. Dabei kommen an das Schiebeteil 46a angeformte Horizontalbefestigungsmittel 12a, 14a mit der Oberseite der Befestigungsschiene 30a in Anlage und das Schiebeteil 46a wird gemeinsam mit den Horizontalbefestigungsmitteln 12a, 14a in eine von der Unterseite des Grundkörpers 38a abgewandte Richtung 80a verschoben (Figur 11).

Eine Verriegelungsfunktion der Betätigungseinheit 22a ist an die Position des Schiebeteils 46a und damit an die Positionen der Horizontalbefestigungsmittel 12a, 14a gekoppelt, und zwar kann eine Verriegelung mittels der Verriegelungsschraube 50a erst durchgeführt werden, wenn das Schiebeteil 46a und damit die Horizontalbefestigungsmittel 12a, 14a in einer der Unterseite des Grundkörpers 38a zugewandten, bei der Montage einer der Befestigungsschiene 30a zugewandten Endstellung angeordnet sind, wie dies in den Figuren 10 und 12 dargestellt ist. Befindet sich das Schiebeteil 46a in einer der Unterseite des Grundkörpers 38a abgewandten Endstellung, wird die Verriegelungsschraube 50a durch die Schraubendruckfeder 64a und das Schiebeteil 46a in Richtung zur Unterseite des Grundkörpers 38a gesperrt, so dass eine Kopplung des Gewindes des ersten Bolzenteils 56a der Verriegelungsschraube 50a mit dem Innengewinde im Gewindebereich 72a der Ausnehmung 62a bzw. des Grundkörpers 38a und damit ein eine Verriegelung bewirkendes Einschrauben der Verriegelungsschraube 50a in den Grundkörper 38a verhindert ist. Bei einem Versuch, die Verriegelungsschraube 50a einzuschrauben, läuft die Schraubendruckfeder 64a auf Block, bevor die Verriegelungsschraube 50a in den Gewindebereich 72a der Ausnehmung 62a eingeschraubt werden kann.

Um eine Verriegelung zu ermöglichen, muss die Sitzbefestigungsvorrichtung entlang der Befestigungsschiene 30a verschoben werden, bis die Horizontalbefestigungsmittel 12a, 14a jeweils im Bereich der Durchtrittsöffnungen 36a zum Liegen kommen und, angetrieben durch die Schraubendruckfeder 64a des Rastmechanismus 24a, in die Durchtrittsöffnungen 36a einrasten (Figur 12). Die Lage des Schiebeteils 46a und damit der Horizontalbefestigungsmittel 12a, 14a wird damit mechanisch erfasst und als Betriebsparameter genutzt. Bereits bevor die Verriegelungsschraube 50a in das Innengewinde des Gewindebereichs 72a eingeschraubt ist, sind die Horizontalbefestigungsmittel 12a, 14a durch eine Federkraft der Schraubendruckfeder 64a in ihrer Verriegelungsstellung gesichert.

Sind die Horizontalbefestigungsmittel 12a, 14a in die Durchtrittsöffnungen 36a eingerastet, kann die Verriegelungsschraube 50a mit dem Gewinde des ersten Bolzenteils 56a in das Innengewinde im Gewindebereich 72a eingeschraubt werden, wodurch die Horizontalbefestigungsmittel 12a, 14a formschlüssig in ihrer Verriegelungsstellung gesichert werden (Figur 10). Ferner ist die Betätigungseinheit 22a zur kraftschlüssigen Verriegelung vorgesehen, und zwar werden bei der Montage mittels der Verriegelungsschraube 50a der Grundkörper 38a und die Vertikalbefestigungsmittel 16a, 18a, 20a, die durch das Verschieben der Sitzbefestigungsvorrichtung in Längsrichtung der Befestigungsschiene 30a zwischen den Durchtrittsöffnungen 36a zum Liegen gekommen sind, von unten an Profilflanken 32a der Befestigungsschiene 30a gedrückt. Mittels der kraftschlüssigen Verriegelung werden vorteilhaft eine Spielfreiheit und ein Vibrationsschutz erreicht.

Um zu vermeiden, dass sich die Verriegelungsschraube 50a aus ihrer Verriegelungsstellung selbsttätig löst, ist zudem eine eine Sicherungseinheit bildende Betätigungseinheit 90a vorgesehen. Eine Sicherungsfunktion der Betätigungseinheit 90a ist ebenfalls an die Position des Schiebeteils 46a und damit an die Positionen der Horizontalbefestigungsmittel 12a, 14a gekoppelt, und zwar kann ein schwenkbar gelagerter Sicherungsbügel 92a der Betätigungseinheit 90a von seiner Freigabestellung (Figuren 11 und 12), in der der Sicherungsbügel 92a in seine der Verriegelungsschraube 50a abgewandte Endstellung geschwenkt ist, nur in seine die Verriegelungsschraube 50a in ihrer Drehstellung sichernde bzw. verriegelnde, der Verriegelungsschraube 50a zugewandte Endstellung geschwenkt werden, wenn das Schiebeteil 46a in seine der Unterseite des Grundkörpers 38a zugewandte Endstellung verschoben ist. Der Sicherungsbügel 92a weist in Seitenschenkel eingebrachte Langlöcher 98a, 100a auf, über die derselbe auf einer im Grundkörper 38a befestigten Achse 102a schwenkbar gelagert ist. Die Langlöcher 98a, 100a sind dabei bezogen auf Längsmittelachsen 104a, 106a der Schenkel, in der der Verriegelungsschraube 50a abgewandten, oberen Endstellung des Sicherungsbügels 92a betrachtet (Figuren 11 und 12), außermittig auf der der Verriegelungsschraube 50a abgewandten Seite angeordnet. Wird bei der Montage das Schiebeteil 46a in die von der Unterseite des Grundkörpers 38a abgewandte Richtung verschoben, kommt dabei das Schiebeteil 46a mit dem Sicherungsbügel 92a, und zwar, in der oberen Endstellung des Sicherungsbügels 92a betrachtet, mit der Verriegelungsschraube 50a zugewandten Bereichen der Schenkel des Sicherungsbügels 92a in Anlage und verschiebt diesen in seine der Unterseite des Grundkörpers 38a abgewandte, obere Endstellung (Figur 11). In dieser Endstellung wird der Sicherungsbügel 92a durch das Schiebeteil 46a in seiner Schwenkbewegung in Richtung der Verriegelungsschraube 50a blockiert, so dass dieser nicht in Richtung der Verriegelungsschraube 50a zur Verriegelung bzw. zur Sicherung derselben geschwenkt werden kann.

Die Betätigungseinheit 90a ist zudem einstückig mit einer optischen Signalausgabeeinheit ausgeführt. Der Sicherungsbügel 92a weist auf seiner - in der der Verriegelungsschraube 50a abgewandten Endstellung betrachtet - der Verriegelungsschraube 50a zugewandten Unterseite ein farbiges, insbesondere rotes Signalmittel 108a auf, das einem Bediener signalisiert, dass die Sitzbefestigungsvorrichtung noch nicht ordnungsgemäß montiert bzw. verriegelt ist.

Erst wenn das Schiebeteil 46a in seine der Unterseite des Grundkörpers 38a zugewandte Endstellung eingerastet ist und die Verriegelungsschraube 50a in den Grundkörper 38a zur Verriegelung eingeschraubt ist, kann der Sicherungsbügel 92a in seine der Verriegelungsschraube 50a zugewandte Endstellung geschwenkt werden, in der das Signalmittel 108 vollständig verdeckt ist (Figuren 9 und 10). Um den Sicherungsbügel 92a in seiner der Verriegelungsschraube 50a zugewandten Endstellung zu sichern, sind am Grundkörper 38a Kugeldruckstücke 110 angeordnet, die in der der Verriegelungsschraube 50a zugewandten Endstellung des Sicherungsbügels 92a in an Innenseiten der Schenkel des Sicherungsbügels 92a angeordnete Vertiefungen 112a einrasten (Figuren 10 und 12).

Zur Demontage wird die Verriegelungsschraube 50a mit dem Gewinde des ersten Bolzenteils 56a wieder aus dem Innengewinde im Gewindebereich 72a herausgeschraubt. Der Sicherungsbügel 92a wird in seine der Verriegelungsschraube 50a abgewandte Endstellung geschwenkt und anschließend wird das Schiebeteil 46a vom Bediener manuell von der Oberseite der Befestigungsschiene 30a abgehoben, um anschließend die Sitzbefestigungsvorrichtung in Längsrichtung der Befestigungsschiene 30a verschieben und aus dieser entnehmen zu können.

### Bezugszeichen

- 10: Boden
- 12: Horizontalbefestigungsmittel
- 14: Horizontalbefestigungsmittel
- 16: Vertikalbefestigungsmittel
- 18: Vertikalbefestigungsmittel
- 20: Vertikalbefestigungsmittel
- 22: Betätigungseinheit
- 24: Rastmechanismus
- 26: Positionierhilfeeinheit
- 28: Ausgabeeinheit
- 30: Befestigungsschiene
- 32: Profilflanke
- 34: Längskanal
- 36: Durchtrittsöffnung
- 38: Grundkörper
- 40: Lagerauge
- 42: Richtung
- 44: Steg
- 46: Schiebeteil
- 48: Deckplatte
- 50: Verriegelungsschraube
- 52: Schraubenkopf
- 54: Innensechskant
- 56: Bolzenteil
- 58: Bolzenteil
- 60: Bolzenteil
- 62: Ausnehmung
- 64: Schraubendruckfeder
- 66: Auflagefläche
- 68: Auflagefläche
- 70: Schraubenkopfaufnahmebereich
- 72: Gewindebereich
- 74: Federaufnahmebereich
- 76: Aufnahmebereich
- 78: Steg
- 80: Richtung
- 82: Bügelfeder
- 84: Stift
- 86: Bohrung
- 88: Langloch
- 90: Betätigungseinheit
- 92: Sicherungsbügel
- 94: Ausnehmung
- 96: Querstift
- 98: Langloch
- 100: Langloch
- 102: Achse
- 104: Längsmittelachse
- 106: Längsmittelachse
- 108: Signalmittel
- 110: Kugeldruckstücke
- 112: Vertiefung

## Patentansprüche

1. Sitzbefestigungsvorrichtung zur Befestigung eines Sitzes oder zum Festzurren von Lasten an einer an einem Boden (10) befestigten Befestigungsschiene (30; 30a), die Durchtrittsöffnungen (36; 36a) aufweist, mit wenigstens einem Horizontalbefestigungsmittel (12, 14; 12a, 14a), wenigstens einem Vertikalbefestigungsmittel (16, 18, 20; 16a, 18a, 20a) sowie mit wenigstens einer Betätigungseinheit (22; 22a, 90a), die als Verriegelungseinheit zur kraftschlüssigen Verriegelung dient, bei welcher das vertikale Befestigungsmittel (16, 18, 20; 16a, 18a, 20a) von unten an Profilflanken (32; 32a) der Befestigungsschiene (30; 30a) gedrückt wird,
**gekennzeichnet durch** einen Rastmechanismus (24; 24a), der zur Positionierung zumindest des Horizontalbefestigungsmittels (12, 14; 12a, 14a) vorgesehen ist und ein selbsttätiges Bewegen des Horizontalbefestigungsmittels (12, 14; 12a, 14a) in eine vorbestimmte Stellung bewirkt, wobei die Betätigungseinheit (22; 22a, 90a) dazu vorgesehen ist, eine kraftschlüssige Verriegelung nur zu ermöglichen, wenn das Horizontalbefestigungsmittel (12, 14; 12a, 14a) in eine Durchtrittsöffnung (36; 36a) eingerastet ist.

2. Sitzbefestigungsvorrichtung zumindest nach Anspruch 1,
**dadurch gekennzeichnet,**
**dass** die Betätigungseinheit (22; 22a, 90a) zur formschlüssigen Verriegelung vorgesehen ist.

3. Sitzbefestigungsvorrichtung nach einem der vorhergehenden Ansprüche,
**gekennzeichnet durch**
wenigstens eine Positionierhilfeeinheit (26) mit einer Ausgabeeinheit (28).

4. Sitzbefestigungsvorrichtung nach einem der vorhergehenden Ansprüche,
**dadurch gekennzeichnet,**
**dass** die Betätigungseinheit (90a) zumindest teilweise eine Sicherungseinheit zur Sicherung der Betätigungseinheit (22a) in zumindest einer Stellung bildet.

5. Sitzbefestigungsvorrichtung nach Anspruch 4,
**dadurch gekennzeichnet,**
**dass** die Betätigungseinheit (90a) zumindest teilweise einstückig mit einer Signalausgabeeinheit ausgeführt ist.

6. Sitzbefestigungsvorrichtung nach einem der Ansprüche 4 oder 5,
**dadurch gekennzeichnet,**
**dass** die Betätigungseinheit (90a) zumindest einen schwenkbar gelagerten Bügel (92a) aufweist.

7. Sitzbefestigungsvorrichtung nach einem der vorhergehenden Ansprüche,
**dadurch gekennzeichnet,**
**dass** die Betätigungseinheit (22; 22a) eine Verriegelungsschraube (50; 50a) aufweist.

8. Sitzbefestigungsvorrichturlg nach Anspruch 7,
**gekennzeichnet durch**
einen Grundkörper (38; 38a) und ein relativ zum Grundkörper (38; 38a) bewegbar gelagertes Schiebeteil (46; 46a) mit dem Horizontalbefestigungsmittel (12, 14; 12a, 14a), wobei in einer Endstellung des Schiebeteils (46; 46a) die Verriegelungsschraube (50; 50a) **durch** das Schiebeteil (46; 46a) in Richtung zur Unterseite des Grundkörpers (38; 38a) gesperrt ist und damit ein eine Verriegelung bewirkendes Einschrauben der Verriegelungsschraube (50; 50a) in den Grundkörper (38; 38a) verhindert ist.

9. Sitzbefestigungsvorrichtung nach Anspruch 7 oder 8,
**dadurch gekennzeichnet, dass**
die Verriegelungsschraube (50; 50a) ein erstes Bolzenteil (56; 56a) mit einem Außengewinde aufweist, das in ein zweites Bolzenteil (58; 58a) ohne Gewinde übergeht.

10. Sitzbefestigungsvorrichtung nach Anspruch 8 und 9,
**dadurch gekennzeichnet, dass**
in der Endstellung des Schiebeteils (46; 46a) eine Kopplung des Gewindes des ersten Bolzenteils (56; 56a) mit einem Innengewinde in einem Gewindebereich (72; 72a) des Grundkörpers (38; 38a) verhindert ist, wobei, wenn das Horizontalbefestigungsmittel (12, 14; 12a, 14a) in eine Durchtrittsöffnung (36; 36a) eingerastet ist, die Verriegelungsschraube (50; 50a) mit dem Gewinde des ersten Bolzenteils (56; 56a) in das lnnengewinde im Gewindebereich (72; 72a) eingeschraubt werden kann.

## Claims

1. Seat attachment device for attaching a seat or for lashing loads to an attachment rail (30; 30a) which is attached to a floor (10) and has passage openings (36; 36a), with at least one horizontal attachment member (12, 14; 12a, 14a), at least one vertical attachment member (16, 18, 20; 16a, 18a, 20a) and with at least one actuating unit (22; 22a, 90a) which serves as a locking unit for non-positive locking in which the vertical attachment member (16, 18, 20; 16a, 18a, 20a) is pressed from below against profile flanks (32; 32a) of the attachment rail (30; 30a), **characterized by** a latching mechanism (24; 24a) which is provided for the positioning of at least the horizontal attachment member (12, 14; 12a, 14a) and brings about an automatic movement of the horizontal attachment member (12, 14; 12a, 14a) into a predetermined position, wherein the actuating unit (22; 22a, 90a) is provided to permit non-positive locking only if the horizontal attachment member (12, 14; 12a, 14a) is latched in a passage opening (36; 36a).

2. Seat attachment device at least according to Claim 1, characterize in that the actuating unit (22; 22a, 90a) is provided for positive locking.

3. Seat attachment device according to one of the preceding claims, **characterized by** at least one positioning-assisting unit (26) with an output unit (28).

4. Seat attachment device according to one of the preceding claims, **characterized in that** the actuating unit (90a) at least partially forms a securing unit for securing the actuating unit (22a) in at least one position.

5. Seat attachment device according to Claim 4, **characterized in that** the actuating unit (90a) is at least partially formed integrally with a signal output unit.

6. Seat attachment device according to either of Claims 4 and 5, **characterized in that** the actuating unit (90a) has at least one pivotably mounted clamp (92a).

7. Seat attachment device according to one of the preceding claims, **characterized in that** the actuating unit (22; 22a) has a locking screw (50; 50a).

8. Seat attachment device according to Claim 7, **characterized by** a basic body (38; 38a) and a sliding part (46; 46a) which is mounted movably relative to the basic body (38; 38a), together with the horizontal attachment member (12, 14; 12a, 14a), wherein the locking screw (50; 50a), in an end position of the sliding part (46; 46a), is blocked by the sliding part (46; 46a) in the direction of the lower side of the basic body (38; 38a) and therefore preventing the locking screw (50; 50a) from being screwed, which brings about locking, into the basic body (38; 38a).

9. Seat attachment device according to Claim 7 or 8, **characterized in that** the locking screw (50; 50a) has a first bolt part (56; 56a) with an external thread which merges into a second bolt part (58; 58a) without a thread.

10. Seat attachment device according to Claims 8 and 9, **characterized in that**, in the end position of the sliding part (46; 46a), coupling of the thread of the first bolt part (56; 56a) to an internal thread in a threaded region (72; 72a) of the basic body (38; 38a) is prevented, whereas, if the horizontal attachment member (12, 14; 12a, 14a) is latched in a passage opening (36; 36a), the locking screw (50; 50a) can be screwed together with the thread of the first bolt part (56; 56a) into the internal thread in the threaded region (72; 72a).

## Revendications

1. Dispositif de fixation d'un siège pour la fixation d'un siège ou pour l'amarrage de charges à un rail de fixation (30, 30a) fixé à un sol (10) et qui présente des ouvertures de passage (36; 36a), avec au moins un moyen de fixation horizontal (12, 14; 12a, 14a), au moins un moyen de fixation vertical (16, 18, 20; 16a, 18a, 20a) et avec au moins une unité d'actionnement (22; 22a, 90a), qui sert d'unité de verrouillage pour le verrouillage par adhérence, dans lequel le moyen de fixation vertical (16, 18, 20; 16a, 18a, 20a) est pressé par le bas sur des flancs profilés (32, 32a) du rail de fixation (30; 30a), **caractérisé par** un mécanisme d'encliquetage (24; 24a), qui est prévu pour positionner au moins le moyen de fixation horizontal (12, 14; 12a, 14a) et qui provoque un mouvement automatique du moyen de fixation horizontal (12, 14; 12a, 14a) dans une position prédéterminée, dans lequel l'unité d'actionnement (22; 22a, 90a) est prévue pour permettre un verrouillage par adhérence uniquement lorsque le moyen de fixation horizontal (12, 14; 12a, 14a) est encliqueté dans une ouverture de passage (36; 36a).

2. Dispositif de fixation d'un siège au moins selon la revendication 1, **caractérisé en ce que** l'unité d'actionnement (22; 22a, 90a) est prévue pour le verrouillage par emboîtement.

3. Dispositif de fixation d'un siège selon l'une quelconque des revendications précédentes, **caractérisé par** au moins une unité d'aide au positionnement (26) avec une unité de sortie (28).

4. Dispositif de fixation d'un siège selon l'une quelconque des revendications précédentes, **caractérisé en ce que** l'unité d'actionnement (90a) forme, au moins partiellement, une unité de blocage pour le blocage de l'unité d'actionnement (22a) dans au moins une position.

5. Dispositif de fixation d'un siège selon la revendication 4, **caractérisé en ce que** l'unité d'actionnement (90a) est réalisée, au moins partiellement, d'une seule pièce avec une unité d'émission de signaux.

6. Dispositif de fixation d'un siège selon l'une quelconque des revendications 4 ou 5, **caractérisé en ce que** l'unité d'actionnement (90a) présente au moins un étrier (92a) monté de façon pivotante.

7. Dispositif de fixation d'un siège selon l'une quelconque des revendications précédentes, **caractérisé en ce que** l'unité d'actionnement (22; 22a) présente une vis de verrouillage (50; 50a).

8. Dispositif de fixation d'un siège selon la revendication 7, **caractérisé par** un corps de base (38; 38a) et une partie coulissante (46; 46a) avec le moyen de fixation horizontal (12, 14; 12a, 14a), montée de façon mobile par rapport au corps de base (38; 38a), dans lequel, dans une position terminale de la partie coulissante (46; 46a), la vis de verrouillage (50; 50a) est bloquée par la partie coulissante (46; 46a) en direction de la face inférieure du corps de base (38; 38a) et un vissage de la vis de verrouillage (50; 50a) dans le corps de base (38; 38a) provoquant un verrouillage est ainsi, empêché.

9. Dispositif de fixation d'un siège selon la revendication 7 ou 8, **caractérisé en ce que** la vis de verrouillage (50; 50a) présente une première partie de tige (56; 56a) avec un filet extérieur, qui se prolonge par une deuxième partie de tige (58; 58a) sans filet.

10. Dispositif de fixation d'un siège selon la revendication 8 ou 9, **caractérisé en ce que**, dans la position terminale de la partie coulissante (46; 46a), un couplage du filet de la première partie de tige (56; 56a) avec un filet intérieur dans une région filetée (72; 72a) du corps de base (38; 38a) est empêché, dans lequel, lorsque le moyen de fixation horizontal (12, 14; 12a, 14a) est encliqueté dans une ouverture de passage (36; 36a), la vis de verrouillage (50; 50a) peut être vissée avec le filet de la première partie de tige (56; 56a) dans le filet intérieur dans la région filetée (72; 72a).
